# FASCICULE DE BREVET EUROPEEN

(11) **EP 1 900 050 B1**
(45) Date de publication et mention de la délivrance du brevet: **15.09.2010**
(21) Numéro de dépôt: 06778636.8
(22) Date de dépôt: 22.06.2006
(51) Int. Cl.: H01M 8/02

(54) **PLAQUE BIPOLAIRE POUR PILE A COMBUSTIBLE COMPRENANT DES NERVURES D'ETANCHEITE**
BIPOLARPLATTE FÜR EINE BRENNSTOFFZELLE MIT DICHTRIPPEN
BIPOLAR PLATE FOR FUEL CELL, COMPRISING SEALING RIBS

(30) Priorité: 28.06.2005 FR 0506598
(43) Date de publication de la demande: 19.03.2008
(73) Titulaire: Peugeot Citroën Automobiles Société Anonyme, 78140 Velizy Villacoublay (FR); Commissariat à l'Energie Atomique, 75015 Paris (FR)
(72) Inventeur: ROY, Francis Résidence les Vignes de Bures -,, F-91940 Les Ulis (FR); LEMASSON, Damien, F-69100 Villeurbanne (FR); POIROT-CROUVEZIER, Jean-Philippe, F-38450 Saint Georges De Commiers (FR); LE GALLO, Patrick, F-38560 Jarrie (FR)
(74) Mandataire: Jacobson, Claude
(86) Numéro de dépôt international: PCT/FR2006/001431
(87) Numéro de publication internationale: WO 2007/003738

(56) Documents cités:
- EP-A- 1 244 166
- EP-A- 1 255 315
- US-A1- 2003 134 173
- US-A1- 2005 031 933
- US-A1- 2005 136 306
- PATENT ABSTRACTS OF JAPAN vol. 2000, no. 07, 29 septembre 2000 (2000-09-29) -& JP 2000 100452 A (MATSUSHITA ELECTRIC IND CO LTD), 7 avril 2000 (2000-04-07)

## Description

La présente invention est relative à une plaque bipolaire pour une pile à combustible du type à membrane échangeuse de protons. La plaque bipolaire est constituée de deux demi-plaques bipolaires collées l'une à l'autre, chaque demi-plaque bipolaire étant constituée d'une plaque généralement rectangulaire comportant dans sa partie centrale un réseau de nervures constituant la zone active, et à sa partie périphérique une pluralité de découpes destinées à constituer des boîtes à fluide, ainsi que des nervures destinées à assurer l'étanchéité.

Une pile à combustible à membrane échangeuse de protons est un dispositif de production d'électricité par réaction électrochimique entre un carburant, par exemple un gaz contenant de l'hydrogène, et un comburant, par exemple un gaz contenant de l'oxygène, séparés par une paroi constituée d'un électrolyte solide. Dans un tel dispositif le carburant et le comburant réagissent pour former un produit de réaction, par exemple de l'eau tout en générant un courant électrique qui peut être utilisé pour des usages divers.

D'une façon générale, une pile à combustible est constituée d'un empilement de cellules réactives ou cellules élémentaires constituées chacune d'un ensemble membrane/ électrode inséré entre deux plaques bipolaires comportant des canaux destinés à assurer la circulation, d'une part, du carburant, d'autre part, du comburant, et enfin, d'un fluide caloporteur de refroidissement, tel que de l'eau. L'ensemble membrane/ électrode est un matériau multicouches, connu en lui-même, comprenant une couche constituée de la membrane d'électrolyte solide proprement dite, disposée entre deux couches actives constituant, d'une part, une cathode, d'autre part, une anode, revêtues elles-mêmes de deux couches externes dites couches de diffusion. L'empilement de cellules élémentaires est maintenu serré entre deux plaques terminales bridées par des goujons s'étendant d'une plaque terminale à l'autre et traversant l'empilement de cellules élémentaires.

Généralement les plaques bipolaires sont réalisées dans des matériaux offrant de bonnes aptitudes de résistance à la corrosion et de conductivité électrique. On connaît par exemple des plaques bipolaires réalisées dans des matériaux carbonés tel que le graphite, le graphite imprégné de polymère, ou les feuilles de graphite souple, mis en forme par usinage ou par moulage. On connaît également des plaques bipolaires réalisées dans des matériaux métalliques tels que des alliages à base de titane, d'aluminium ou à base de fer et par exemple en acier inoxydable. Ces plaques bipolaires réalisées en matériau métallique sont en général des plaques mises en forme par emboutissage ou estampage. Dans les plaques bipolaires réalisées à partir de feuilles métalliques mises en forme par emboutissage, l'arrivée des fluides et l'évacuation des sous-produits sont réalisés dans des zones de la plaque bipolaire localement plane, ce qui nécessite l'utilisation d'un cadre ayant une forme adaptée et pouvant servir également à assurer l'étanchéité périphérique de la plaque bipolaire. Cette technique présente l'inconvénient de nécessiter pour une même plaque bipolaire en outre deux demi-plaques bipolaires, une pièce complémentaire destinée à assurer la jonction entre les deux demi-plaques bipolaires et à assurer les alimentations et les évacuations de fluide et de sous-produit. Il en résulte des plaques bipolaires relativement massives.

De telles plaques bipolaires métalliques sont connues notamment de US 2005/031933.

En particulier, l'une des raisons pour lesquelles les plaques bipolaires sont relativement importantes est qu'il est nécessaire de prévoir, d'une part, des étanchéités autour de chacun des collecteurs de fluide, et d'autre part, d'assurer une étanchéité toute à la périphérie de la plaque bipolaire. Or, il n'est pas possible d'utiliser une même nervure pour assurer l'étanchéité à la fois de toutes les alimentations ou évacuations de fluide et de l'ensemble de la périphérie de la plaque bipolaire, car cela entraînerait un mélange des différents fluides.

Le but de la présente invention est de remédier à ces inconvénients en proposant une plaque bipolaire réalisée à partir de plaques métalliques, qui soit plus légère et plus économique que les plaques connues tout en séparant les différents circuits de fluides.

A cet effet, l'invention a pour objet une plaque bipolaire pour pile à combustible comprenant une demi-plaque bipolaire cathodique et une demi-plaque bipolaire anodique accolées l'une à l'autre, chaque demi-plaque bipolaire étant constituée d'une plaque métallique comportant dans sa partie centrale une zone active, et, à sa partie périphérique, une pluralité de découpes destinées à constituer au moins deux boîtes à fluide comburant, au moins deux boîtes à fluide carburant et au moins deux boîtes à fluide caloporteur, au moins une demi-plaque bipolaire comprenant au moins une nervure de liaison entre une découpe périphérique et la zone active. Chaque découpe d'une demi-plaque bipolaire destinée à constituer une boîte à fluide est entourée d'une nervure d'étanchéité de boîte à fluide, en saillie sur la face externe de la demi-plaque bipolaire, et chaque demi-plaque bipolaire comprend à sa périphérie une nervure d'étanchéité de la zone active, en saillie sur la face externe de la demi-plaque bipolaire, reliant de façon continue les nervures d'étanchéité des boîtes à fluide caloporteur et entourant par l'extérieur les boîtes à comburant et à carburant, chaque canal constitué par un segment de nervure entre deux boîtes à fluide caloporteur étant obstrué par au moins un moyen d'obstruction.

Au moins un moyen d'obstruction d'un canal formé par une nervure entre deux boîtes de fluide caloporteur, est, par exemple un plot en saillie sur la face interne d'une demi-plaque bipolaire, destiné à coopérer avec l'intérieur de la nervure d'étanchéité de l'autre demi-plaque bipolaire.

De préférence, les nervures d'étanchéité des boîtes de fluide de refroidissement et d'étanchéité de la zone active des deux demi-plaques bipolaires sont en regard les unes des autres, sauf dans au moins une zone située entre deux nervures d'étanchéité de boîtes à fluide caloporteur, et dans cette zone, au moins chaque demi-plaque bipolaire comporte un plot en saillie sur sa face interne, coopérant avec la partie interne de la nervure d'étanchéité de la zone active de l'autre plaque bipolaire, de façon à obstruer ladite nervure.

Au moins une demi-plaque bipolaire est par exemple une plaque métallique dans laquelle les nervures et l'au moins un plot sont réalisés par emboutissage, et au moins une plaque bipolaire constituée d'une plaque métallique découpée et emboutie est en acier inoxydé.

L'invention concerne également une cellule constituée d'un assemblage membrane/électrode comprend au moins une plaque bipolaire selon l'invention.

De préférence, le moyen d'obstruction d'un canal constitué par un segment de nervures entre deux boîtes à fluide caloporteur est un bouchon en polymère.

L'invention va maintenant être décrite plus en détail mais de façon non limitative en regard des figures annexées dans laquelle :
- la figure 1 est une vue de face d'une plaque bipolaire ;
- la figure 2 est une vue en perspective éclatée d'une plaque bipolaire constituée de deux demi-plaques bipolaires accolées, dans la zone de jonction entre une nervure d'étanchéité et une découpe de boîte à fluide caloporteur ;
- la figure 3 est une vue agrandie d'une plaque bipolaire dans la zone de jonction d'une nervure d'étanchéité et d'une découpe de boîte à fluide caloporteur.

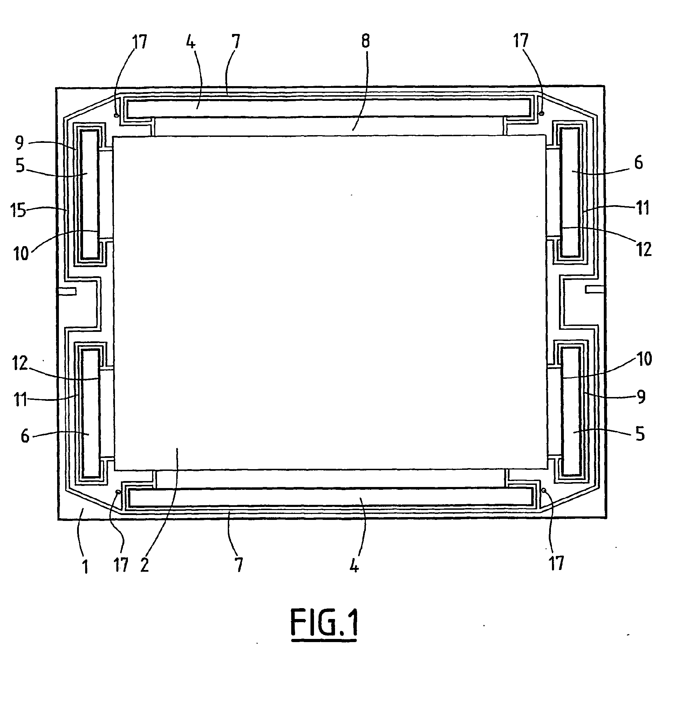

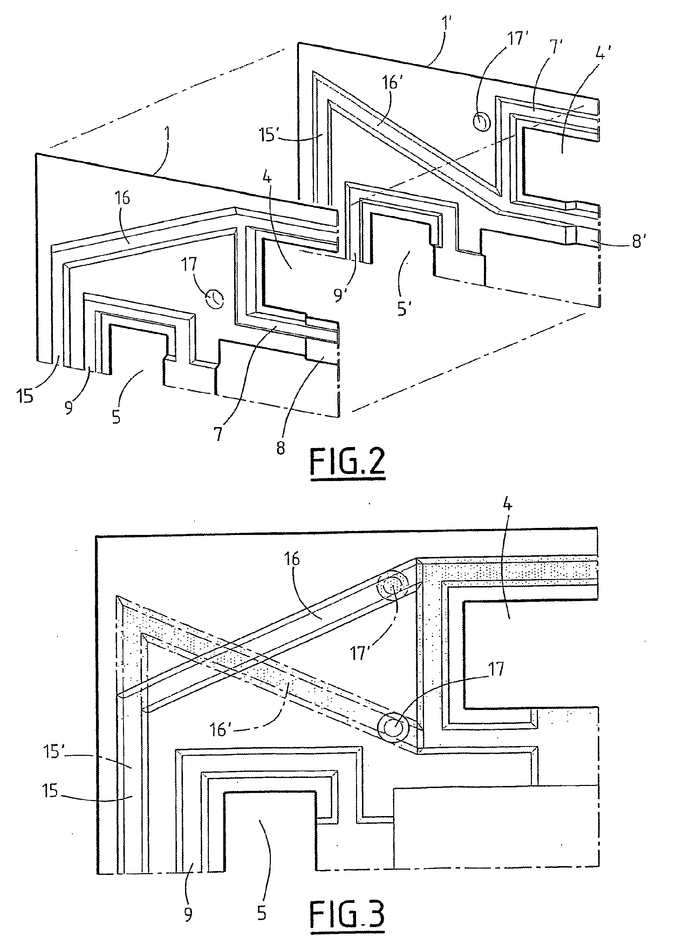

La plaque bipolaire représentée à la figure 1, et dont on ne voit qu'une seule face, est constituée d'une demi-plaque bipolaire 1 cathodique ou anodique, et d'une demi-plaque bipolaire 1' (partiellement visible sur la figure 2), anodique ou cathodique respectivement, les deux demi-plaques étant accolées l'une contre l'autre par leurs faces internes. Les deux demi-plaques, qui ont des formes tout à fait comparables, sont constituées chacune d'une plaque métallique par exemple en acier inoxydable, de forme généralement rectangulaire. La partie centrale 2 de chaque demi-plaque bipolaire constitue une zone active destinée à assurer une bonne répartition de l'écoulement des fluides actifs sur les surfaces externe de chaque demi-plaque bipolaire, ainsi que du fluide caloporteur entre les deux demi-plaque bipolaires. A leurs périphéries, les deux demi-plaques bipolaires comportent des découpes 4, 5, 6 de forme généralement allongée destinées à réaliser des passages des boîtes à fluide pour l'alimentation et l'évacuation des différents fluides nécessaires au fonctionnement de la pile.

En particulier à la partie supérieure et à la partie inférieure (tel que représenté sur la figure), les plaques bipolaires comportent des découpes 4 pour la demi-plaque bipolaire 1 et 4' pour la demi-plaque bipolaire 1', destinées à constituer les boîtes à fluide caloporteur. La découpe de la partie supérieure est par exemple destinée à réaliser la boîte d'alimentation en fluide caloporteur, et la découpe inférieure est destinée à réaliser la boîte d'évacuation du fluide caloporteur. Sur les deux bords latéraux, les demi-plaques bipolaires comportent des découpes 5 et 6, également généralement allongées et destinées à réaliser d'une part les boîtes d'alimentation et d'évacuation du fluide comburant, et d'autre part des boîtes d'alimentation et d'évacuation du fluide carburant.

Les découpes 4, 4' destinées à réaliser les boîtes à fluide caloporteur, sont entourées par des nervures 7, 7' en saillie sur la surface externe de chacune des demi-plaques bipolaires 1, 1', destinées à assurer l'étanchéité. Sur leur bordure orientée vers la zone active 2, les découpes 4, 4' comportent également des nervures 8, 8' permettant la communication entre l'intérieur des boîtes à fluide caloporteur et l'espace situé entre les deux demi-plaques bipolaires 1, 1' en regard de la zone active 2. En effet, le fluide caloporteur est destiné à circuler dans l'espace situé entre les deux demi-plaques bipolaires. Il doit donc entrer par l'une des boîtes caloporteur, puis circuler entre les deux demi-plaques, et enfin être évacué par une deuxième boîte à fluide caloporteur.

De la même façon, les découpes destinées à former des boîtes à comburant 5, 5' ou à carburant 6 sont entourées d'une part de nervures 9, 9' et 11 respectivement destinées à assurer l'étanchéité, et d'autre part de nervures 10 et 12 respectivement destinées à assurer la communication entre les boîtes d'amenée et d'évacuation du comburant ou du carburant, et les surfaces externes de la plaque bipolaire. En effet, les fluides comburant et carburant doivent circuler entre les faces externes des plaques bipolaires et les membranes actives interposées entre deux plaques bipolaires successives ; le fluide comburant circulant sur la face externe de la demi-plaque bipolaire cathodique, et le fluide carburant sur la face externe de la demi-plaque bipolaire anodique.

Les nervures destinées à assurer la communication entre les boîtes à fluides comburant ou carburant et les faces externes des plaques bipolaires, sont des nervures qui d'une part débouchent à l'intérieur des boîtes à fluides comburant ou carburant, et d'autre part débouchent à l'autre extrémité par l'intermédiaire d'une ouverture prévue dans la demi-plaque bipolaire adaptée, l'une, correspondant au fluide comburant, sur la face externe de la demi-plaque bipolaire cathodique, et l'autre, correspondant au fluide carburant, sur la face externe de la demi-plaque anodique.

L'étanchéité de la plaque bipolaire dans son ensemble est réalisée par deux nervures périphériques en regard l'un de l'autre en saillie sur les faces externes de la plaque bipolaire. Une nervure périphérique est prévue sur une demi-plaque bipolaire, et l'autre nervure sur l'autre demi-plaque bipolaire. Chaque nervure périphérique comporte des segments 15 et 15' assurant la liaison entre les nervures 7, 7' entourant les découpes 4, 4' destinées à réaliser des boîtes à fluide caloporteur. Les segments 15, 15' qui relient une ouverture correspondant à une boîte d'entrée du fluide caloporteur à une ouverture correspondant à une boîte de sortie de ce fluide, passent à l'extérieur des nervures d'étanchéité 9 et 11 des découpes 5 et 6 destinées à réaliser des boîtes à fluides comburant ou carburant.

En l'absence de dispositions particulières, les segments 15, 15' des nervures d'étanchéité périphérique assureraient un passage direct, c'est-à-dire un bypass parasite, entre les nervures d'étanchéité 7, 7' d'une découpe 4, 4' d'une boîte à fluide caloporteur supérieur et les nervures d'étanchéités correspondantes de la découpe de boîte à fluide caloporteur inférieur correspondante. Du fait des liaisons entre les nervures 7, 7' d'étanchéité et les nervures 8, 8' d'alimentation en fluide caloporteur, cela conduirait à un circuit parasite du fluide de refroidissement entre l'entrée et la sortie sans passer par la zone à refroidir.

Afin d'éviter cette communication parasite entre les boîtes à fluide caloporteur supérieure et inférieure, on prévoit sur les segments des nervures d'étanchéité périphérique 15 de la demi-plaque bipolaire 1, des zones de liaison avec les nervures d'étanchéité 7 entourant la découpe de boîte à fluide caloporteur 4, les liaisons 16 qui s'étendent par exemple vers l'extérieur et qui sont complétées chacune par un plot 17 en saillie sur la face interne de la demi-plaque bipolaire 1.

De la même façon sur la demi-plaque bipolaire 1' qui comporte deux nervures d'étanchéité périphériques 15' venant en regard des segments de nervures périphériques 15 de la demi-plaque bipolaire 1, on prévoit au voisinage des nervures d'étanchéité 7' entourant les découpes 4' destinées à réaliser des boîtes à fluide caloporteur, des zones de liaison 16' qui sont orientées vers l'intérieur, de sorte que, lorsque les deux demi-plaques bipolaires sont accolées, chaque plot 17 de la demi-plaque bipolaire 1 vient obstruer la partie correspondante 16' d'un segment de nervure périphérique 15'.

De la même façon sur la demi-plaque 1' on prévoit des plots 17' en saillie vers la face interne de la demi-plaque bipolaire 1', disposés de telle sorte que, lorsque les deux demi-plaques bipolaires sont accolées l'une à l'autre, chaque plot vient obstruer la partie correspondante 16 d'un segment de nervure d'étanchéité périphérique 15.

Ainsi, avec des segments de nervure d'étanchéité périphérique 15 et 15' en continuité avec les nervures d'étanchéité périphérique 7, 7' des découpes 4, 4' destinées à former des boîtes à fluide de refroidissement, on diminue l'encombrement de la plaque bipolaire et, du fait de la disposition des plots 17 et 17' qui viennent obstruer les nervures d'étanchéité périphériques 15 et 15', on évite la création d'un bypass entre les boîtes d'arrivée de fluide de refroidissement et les boîtes d'évacuation de fluide de refroidissement.

Le moyen d'obstruction ou de blocage du bypass tel qu'il a été décrit n'est pas limitatif et on peut envisager d'autres dispositions comparables permettant d'éviter un bypass entre les boîtes d'amenée de fluide de refroidissement et les boîtes d'évacuation des fluides de refroidissement. Ce moyen peut être, par exemple un bouchon en polymère de forme adaptée, inséré localement dans la nervure, et de taille suffisante pour être pincé entre les deux-demi plaques bipolaires. Ces bouchons peuvent être maintenus en place par des points de colle.

## Revendications

1. Plaque bipolaire pour pile à combustible, du type comprenant une demi-plaque bipolaire cathodique et une demi-plaque bipolaire anodique accolées l'une à l'autre, chaque demi-plaque bipolaire (1, 1') étant constituée d'une plaque métallique comportant dans sa partie centrale une zone active (2) et à sa partie périphérique une pluralité de découpes (4, 4', 5, 5', 6) destinées à constituer au moins deux boîtes à comburant, au moins deux boîtes à carburant et au moins deux boîtes à fluide caloporteur, au moins une demi-plaque bipolaire (1, 1') comprenant au moins une nervure de liaison (8, 8', 10, 12) entre une découpe périphérique (4, 4', 5, 5', 6) et la zone active (2), **caractérisée en ce que** chaque découpe (4, 5, 6) d'une demi-plaque bipolaire destinée à constituer une boîte à fluide est entourée d'une nervure d'étanchéité (7, 7', 9, 9', 11) de boîte à fluide, en saillie sur la face externe de la demi-plaque bipolaire, et **en ce que** chaque demi-plaque bipolaire comprend à sa périphérie une nervure d'étanchéité (15, 15') de la zone active, en saillie sur la face externe de la demi-plaque bipolaire, reliant de façon continue les nervures d'étanchéité (7, 7') des boîtes à fluide caloporteur et entourant par l'extérieur les nervures d'étanchéité (9, 9', 10) des boîtes à comburant et à carburant, chaque canal constitué par un segment de nervure entre deux boîtes à fluide de caloporteur étant obstrué par un moyen d'obstruction (17, 17').

2. Plaque bipolaire pour pile à combustible selon la revendication 1, **caractérisée en ce que** au moins un moyen d'obstruction d'un canal constitué par un segment de nervure entre deux boîtes caloporteur est constitué par un plot (17, 17') en saillie sur la face interne d'une demi-plaque bipolaire et destiné à coopérer avec l'intérieur de la nervure d'étanchéité (15 , 15') de l'autre demi-plaque bipolaire de façon à obstruer le canal constitué par la nervure entre deux boîtes à fluide caloporteur.

3. Plaque bipolaire pour pile à combustible selon la revendication 2, **caractérisée en ce que** les nervures d'étanchéité (7, 7', 9, 9', 11) des boîtes de fluide caloporteur et d'étanchéité (15, 15') de la zone active d'une demi-plaque bipolaire sont en regard des nervures d'étanchéité correspondantes de l'autre demi-plaque bipolaire, sauf dans au moins une zone située entre deux nervures d'étanchéité d'une boîte d'entrée et d'une boîte de sortie du fluide caloporteur, et **en ce que**, dans cette zone, au moins chaque demi-plaque bipolaire comporte un plot (17, 17') en saillie sur sa face interne, coopérant avec la partie interne de la nervure d'étanchéité (15, 15') de la zone active de l'autre plaque bipolaire, de façon à obstruer ladite nervure.

4. Plaque bipolaire selon la revendication 2 ou la revendication 3, **caractérisée en ce que** au moins une demi-plaque bipolaire (1, 1') est une plaque métallique dans laquelle les nervures et l'au moins un plot sont réalisés par emboutissage.

5. Plaque bipolaire selon la revendication 4, **caractérisée en ce que** au moins une demi-plaque bipolaire constituée d'une plaque métallique découpée et emboutie est en acier inoxydable.

6. Pile à combustible du type comprenant au moins une cellule constituée d'un assemblage membrane/électrode comprenant au moins une plaque bipolaire, conforme à l'une quelconque des revendications 1 à 5.

7. Pile à combustible selon la revendication 6, **caractérisée en ce que** le moyen d'obstruction d'un canal constitué par un segment de nervure entre deux boîtes à fluide caloporteur est un bouchon en polymère.

## Claims

1. Bipolar plate for a fuel cell, of the type comprising a cathodic bipolar half-plate and an anodic bipolar half-plate attached to one another, each bipolar half-plate (1, 1') being made up of a metal plate comprising, in its central part, an active zone (2) and, in its peripheral part, a plurality of cut-outs (4, 4', 5, 5', 6) intended to form at least two oxidant boxes, at least two fuel boxes and at least two coolant boxes, at least one bipolar half-plate (1, 1') comprising at least one connecting rib (8, 8', 10, 12) between a peripheral cut-out (4, 4', 5, 5', 6) and the active zone (2), **characterised in that** each cut-out (4, 5, 6) of a bipolar half-plate intended to form a box for fluid is surrounded by a fluid box sealing rib (7, 7', 9, 9', 11), projecting from the outer surface of the bipolar half-plate, and **in that** each bipolar half-plate comprises at its periphery a sealing rib (15, 15') for the active zone, projecting from the outer surface of the bipolar half-plate, continuously connecting the sealing ribs (7, 7') of the coolant boxes and externally surrounding the sealing ribs (9, 9', 10) of the oxidant and fuel boxes, each channel that consists of a segment of rib between two coolant boxes being obstructed by obstructing means (17, 17').

2. Bipolar plate for a fuel cell according to claim 1, **characterised in that** at least one means of obstructing a channel consisting of a segment of rib between two coolant boxes consists of a stud (17, 17') projecting from the inner surface of a bipolar half-plate and adapted to cooperate with the inside of the sealing rib (15, 15') of the other bipolar half-plate so as to obstruct the channel formed by the rib between two coolant boxes.

3. Bipolar plate for a fuel cell according to claim 2, **characterised in that** the sealing ribs (7, 7', 9, 9', 11) of the coolant boxes and the sealing ribs (15, 15') of the active zone of a bipolar half-plate are arranged facing the corresponding sealing ribs of the other bipolar half-plate, except in at least one zone located between two sealing ribs of an inlet box and an outlet box for the coolant, and **in that**, in this zone, at least each bipolar half-plate comprises a stud (17, 17') projecting from its inner surface, cooperating with the inner part of the sealing rib (15, 15') of the active zone of the other bipolar plate, so as to obstruct the said rib.

4. Bipolar plate according to claim 2 or claim 3, **characterised in that** at least one bipolar half-plate (1, 1') is a metal plate in which the ribs and at least one stud are formed by stamping.

5. Bipolar plate according to claim 4, **characterised in that** at least one bipolar half-plate made up of a metal plate that has been cut out and stamped is made of stainless steel.

6. Fuel cell of the type comprising at least one cell made up of a membrane/electrode assembly comprising at least one bipolar plate according to any one of claims 1 to 5.

7. Fuel cell according to claim 6, **characterised in that** the means for obstructing a channel formed by a segment of rib between two coolant boxes is a polymer stopper.

## Patentansprüche

1. Bipolarplatte für eine Brennstoffzelle, die eine kathodische Halbplatte und eine daran angefügte anodische Halbplatte aufweist, wobei jede Halbplatte (1, 1') durch eine Metallplatte gebildet wird, die in ihrem zentralen Bereich eine aktive Zone (2) und in ihrem Umfangsbereich mehrere Ausschnitte (4, 4', 5, 5', 6) aufweist, die dazu bestimmt sind, wenigstens zwei Boxen für einen Sauerstoffträger, wenigstens zwei Boxen für einen Brennstoff und wenigstens zwei Boxen für ein fluides Wärmemedium zu bilden, wobei wenigstens eine Halbplatte (1, 1') wenigstens eine Verbindungsrippe (8, 8', 10, 12) zwischen einem Umfangsausschnitt (4, 4', 5, 5', 6) und der aktiven Zone (2) aufweist, **dadurch gekennzeichnet, dass** jeder Ausschnitte (4, 5, 6) einer Halbplatte, der dazu bestimmt ist, eine Fluidbox zu bilden, von einer Rippe (7, 7', 9, 9', 11) zur Abdichtung der Fluidbox umgeben ist, die von der äußeren Oberfläche der Halbplatte vorspringt, und dass jede Halbplatte an ihrem Umfang eine Rippe (15, 15') zur Abdichtung der aktiven Zone aufweist, die von der äußeren Oberfläche der Halbplatte vorspringt, die Rippen (7, 7') zur Abdichtung der Boxen für das Wärmemedium durchgehend verbindet und die Rippen (9, 9', 10) zur Abdichtung der Boxen für den Sauerstoffträger und den Brennstoff außen umgibt, wobei jeder Kanal, der durch einen Abschnitt der Rippen zwischen zwei Boxen für das Wärmemedium gebildet wird, durch ein Sperrmittel (17, 17') versperrt ist,

2. Bipolarplatte für eine Brennstoffzelle nach Anspruch 1, **dadurch gekennzeichnet, dass** wenigstens ein Sperrmittel eines Kanals, der durch einen Rippenabschnitt zwischen zwei Boxen für das Wärmemedium gebildet wird, durch einen Stützpunkt (17, 17') gebildet wird, der von der Innenfläche einer Halbplatte vorspringt und dazu bestimmt ist, mit dem Inneren der Dichtrippe (15, 15') der anderen Halbplatte so zusammenzuwirken, dass der durch die Rippe zwischen zwei Boxen für das Wärmemedium gebildete Kanal versperrt wird.

3. Bipolarplatte für eine Brennstoffzelle nach Anspruch 2, **dadurch gekennzeichnet, dass** die Rippen (7, 7', 9, 9', 11) zur Abdichtung der Boxen für das Wärmemedium und die Rippen (15, 15') zur Abdichtung der aktiven Zone einer Halbplatte den entsprechenden Dichtrippen der anderen Halbplatte gegenüberliegen, mit Ausnahme wenigstens einer Zone, die zwischen zwei Rippen zur Abdichtung einer Einlassbox und einer Auslassbox für das Wärmemedium liegt, und dass in dieser Zone wenigstens eine Halbplatte einen von ihrer Innenfläche vorspringenden Stützpunkt (17, 17') aufweist, der mit dem inneren Teil der Dichtrippe (15, 15') der aktiven Zone der anderen Bipolarplatte so zusammenwirkt, dass die Rippe versperrt wird.

4. Bipolarplatte nach Anspruch 2 oder nach Anspruch 3, **dadurch gekennzeichnet, dass** wenigstens eine Halbplatte (1, 1') eine Metallplatte ist, in der die Rippen und wenigstens ein Stützpunkt durch Prägung gebildet sind.

5. Bipolarplatte nach Anspruch 4, **dadurch gekennzeichnet, dass** wenigstens eine Halbplatte durch eine ausgeschnittene und geprägte Metallplatte aus rostfreiem Stahl gebildet wird.

6. Brennstoffzelle mit wenigstens einer Zelle, die durch eine Membran/Elektroden-Anordnung gebildet wird, die wenigstens eine Bipolarplatte nach einem der Ansprüche 1 bis 5 aufweist.

7. Brennstoffzelle nach Anspruch 6, **dadurch gekennzeichnet, dass** das Sperrmittel für einen durch einen Rippenabschnitt zwischen zwei Boxen für das Wärmemedium gebildeten Kanal ein Stopfen aus Polymermaterial ist.
